# EUROPEAN PATENT SPECIFICATION

(11) **EP 0 318 089 B1**
(45) Date of publication and mention of the grant of the patent: **03.02.1993**
(21) Application number: 88202590.1
(22) Date of filing: 17.11.1988
(51) Int. Cl.: F16B 7/00, F16B 21/10, F16B 41/00, E04G 25/06, E04G 7/30

(54) **Coupling device**
Verbindungsteil
Elément d'accouplement

(30) Priority: 20.11.1987 NL 8702789
(43) Date of publication of application: 31.05.1989
(73) Proprietor: ALTREX B.V., Nl-8071 CW Nunspeet (NL)
(72) Inventor: van Leeuwen, Martin, NL-3848 CD Harderwijk (NL)
(74) Representative: van der Arend, Adrianus G.A., Ir.

(56) References cited:
- DE-C- 277 979
- FR-A- 1 082 293
- FR-A- 2 444 835
- GB-A- 622 131
- GB-A- 1 207 700

## Description

The invention relates to a coupling device according to the preamble of claim 1. The elements to be coupled can be bars, pipes and the like.

A coupling device of this type is known from FR-A-2 444 835, in particular fig.9. With the prior art device the locking means comprise a tab having a through hole therein and being connected perpendicular to the bent-over lockable end part of the pin. Said hole is intended to be used for locking the pin to a scaffold. Said document does not disclose how such locking is realized. After having inserted the pin through the holes of the sleeve part and the insertion part with the bent-over end part of the pin in one vertical direction it is turned over an angle of 180° enabling an other tab pivotably mounted in a longitudinal slot in an other end of the pin to pivot preventing the pin to be pulled back in this position.

A disadvantage of the prior art device is that said other end part of the pin having said slot makes the pin relatively long, so that working people on the scaffold could be caught by it, which may cause a dangerous situation. In addition, because of said slot and the other tab pivotably retained therein, such pin is rather difficult to manufacture and therefore costly. Further said slot and the pivoting means for the tab present therein could be polluted or could be corroded such that the pivotable tap will not pivot if the pin is turned into the respective position thereof. If this is noticed by a person placing said pin he must try to pivot said tab by its fingers which is time consuming and cumbersome and might therefore be left undone causing a dangerous situation. If not noticed by said person this will also cause a dangerous situation. In addition it cannot be seen from some distance whether the pin is in its locking position. It is even more difficult to see from distance whether the pivotable tab is in its locking position.

The object of the invention is to eliminate the disadvantages of the known device. This object is achieved for the device described in the preamble of Claim 1 by means of the measures specified in the characterizing part of Claim 1. In this way a reliable locking of the inserted pin can always easily be obtained, and it can be seen from even a great distance away whether or not the device is in its locked position.

The device according to the invention is relatively small and simple and is easily and quickly fastened to or removed from the sleeve part by means of a clamping strip.

When the inserted part of the pin runs horizontally through the parts the axis of rotation of the tumbler element is preferably horizontal and disposed below the part of the pin inserted into the parts. This prevents inadvertent unlocking of a locked pin through the force of gravity.

Each end of the pin preferably has a thickened part to prevent loss of the pin from the hole of the tumbler element. Since the tumbler element is rotatable, when the pin is fully withdrawn from the parts, it also assumes a user-friendly position, and then runs particularly in the longitudinal direction along the sleeve part.

The tumbler element can be fastened by means of a coupling piece to the sleeve part, for example by welding. However, the tumbler element is preferably connected to the sleeve part by means of a strip of adjustable length which is fitted round the sleeve part.

The invention will be explained with reference to the figures, in which:
Fig. 1 shows in perspective and dismantled a preferred embodiment of the coupling device according to the invention;
Figs. 2a, b, c show in perspective the coupling device according to Fig. 1 connected to a tubular structural element, in three different phases for coupling or uncoupling of another tubular part and securing of the securing pin of the coupling device;
Fig. 3 with tubular parts shown in cross section shows the coupling device according to Fig. 1 in the phase shown in Fig. 2c;
Fig. 4 shows in perspective another embodiment of a coupling device according to the invention connected to a tubular structural element in a position corresponding to that in Fig. 2a;
Fig. 5 shows perspective and in dismantled state yet another embodiment of the coupling device according to the invention.

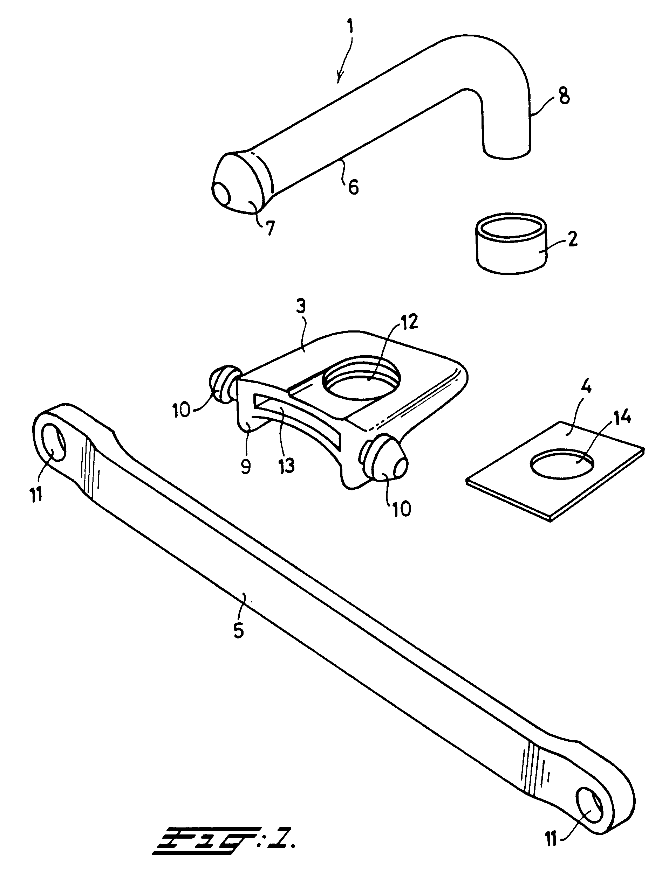

The embodiment of the coupling device according to the invention shown in the dismantled state in Fig. 1 comprises a securing pin 1, a cap 2, a tumbler element 3, a securing plate 4 and a fixing strip 5 of flexible material.

The securing pin 1 has a relatively long, straight part 6 having at its end a thickened part 7, and an end part 8 which is bent over at right angles to the long part 6. The cap 2 can be fitted in clamping fashion on the end of the flanged part 8 of the pin 1.

The tumbler element 3 is essentially parallelepipedal in shape and of small thickness, and one of its narrow sides 9 is adapted to the shape of a sleeve part of a structural element against which said side 9 must be fitted. Each of the two narrow sides going out from the narrow side 9 has a knob-like protuberance 10 close to the narrow side 9. The protuberances 10 can be inserted in a locking manner through apertures 11 formed on the ends of the fastening strip 5. The diameter of the apertures 11 is smaller than the diameter of the protuberances 10. The connecting line between the protuberances 10 forms an axis of rotation for the tumbler element 3.

The tumbler element 3 has a hole 12 with a centre line intersecting the connecting line between the protuberances 10. The tumbler element 3 also has an internal space in which the securing plate 4 can be pushed into the tumbler element 3 via an aperture 13 present on the narrow side 9, the centre line of a hole 14 formed in the securing plate 4 coinciding with the centre line of the hole 12. The diameter of the hole 14, and possibly the diameter of the hole 12 of the tumbler element 3, which could be made of a relatively soft plastic, is smaller than the diameter of the thickened part 7 and the external diameter of the cap 2. When the pin 1 has been pushed through the hole 12 of the tumbler element 3 and the cap 2 is placed over the end of the bent end part 8, the pin 1 cannot therefore come out of the hole 12 any more.

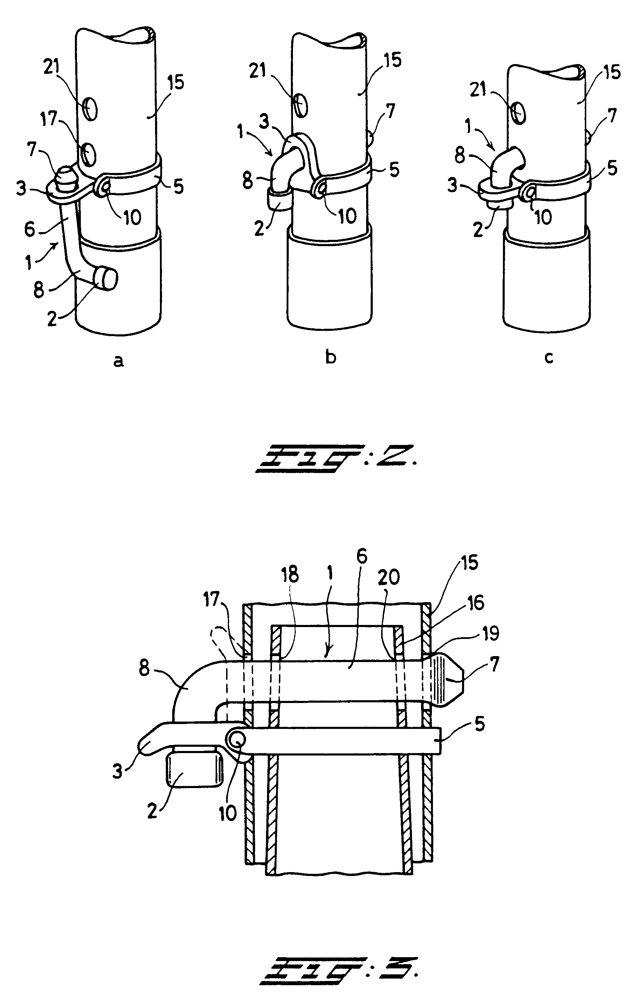

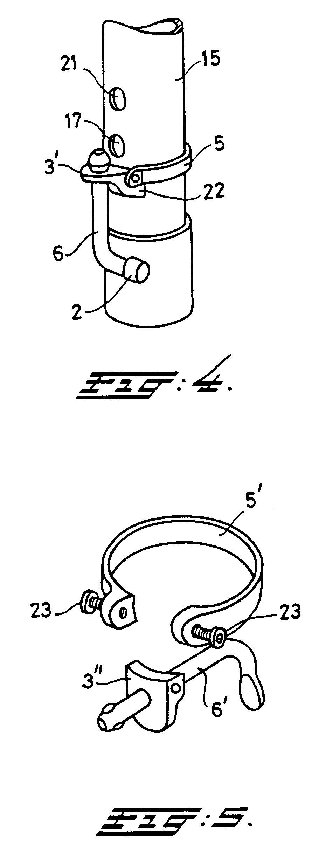

Fig. 2 shows the coupling device according to Fig. 1 clamped by means of the clamping strip 5 around a sleeve part 15 of a structural element, in three different phases of coupling or uncoupling of the sleeve part 15 to or from an insertion part 16 of another structural element (Fig. 3).

In the phase shown in Fig. 2a the sleeve part 15 isnot coupled to the insertion part 16. The pin 1 is resting with the thickened part 7 on one side of the tumbler element 3 and is hanging down vertically so that it can be rotated.

The sleeve part 15 and the insertion part 16 have at least one pair of holes lying opposite each other when the parts are inserted, such as the pair 17, 18 and the pair 19, 20 with a diameter which is slightly larger than the diameter of the thickened part 7 of the pin 1.

In order to obtain the situation shown in Fig. 2b, in which the pin 1 is inserted through the holes 17 to 20, the tumbler element 3 is first turned upwards, so that the thickened part 7 is in front of the hole 17 of the sleeve part 15, following which, if the insertion part 16 is properly directed, the pin can be inserted through the holes 17, 20. The pin 1 can then be turned about the axis of its part pushed through the holes.

When the tumbler element 3 is then turned downwards in the position shown in Fig. 2b, the position shown in Fig. 2c with locked or secured pin is obtained. This position is shown in elevation and on a larger scale also in Fig. 3, with parts 15, 16 shown in cross section. In this position the pin 1 cannot be displaced in any way. In the position shown in Fig. 2c there can be no misunderstanding about whether or not the parts 15, 16 are coupled. This can be seen from a distance. It can be seen even better if the side of the tumbler element 3 resting in Fig. 2c on the cap 2 is of a colour which contrasts with the colour of the sleeve part 15.

The coupling device can be slid over the sleeve part 15 through use of the clamping strip 5. When the coupling device is not being used, such as during transportation, the coupling device can then be pushed further from the insertion aperture of the sleeve part 15 for the insertion part 16 thereof to a set of opposite holes, including a hole 21, into the sleeve part 15, following which the pin 1 is pushed through this set of holes, including the hole 21, and can then be locked by turning the tumbler element 3. Any problems as a result of the mobility of the pin, which cannot in fact be lost, during transport or storage of the structural elements of such coupling devices are thereby reduced.

Fig. 3 also shows by dashed lines the position of the tumbler element 3 for the phase shown in Fig. 2b.

It is pointed out that, instead of the cap 2 acting here as the seat for the tumbler element 3, the end of the end part 8 can be bent further to prevent loss from the tumbler element 3. Moreover, the end part 8 can be bent over so far that the tumbler element 3 can turn through an angle of approximately 180° in the situations shown in Figs. 2b and 2c. If the large sides of the tumbler element 3 then are in two different colours which contrast with the sleeve part 15, it is possible to see from a very great distance whether the pin 1 is locked.

Fig. 4 shows in perspective another embodiment of a coupling device according to the invention in a position which is comparable to the position shown in Fig. 2a. The tumbler element 3′ has at the bottom side a seat 22 of such a shape that the pin 6 in the position of the coupling device shown hangs free in the bore of the tumbler element 3′. When in this position a force is exerted on the tumbler element 3′ the pin 6 will be able to continue moving freely, and the pin 6 will not then damage the edge part of the bore of the tumbler element 3′. The embodiment shown in Fig. 4 is therefore more durable.

Fig. 5 shows in perspective and in a dismantled state yet another embodiment of the coupling device according to the invention. This embodiment comprises a strip 5′ of fixed length which can be screwed to a tumbler element 3˝ by means of screws 23 pushed through bores present in the ends of the strip 5′. Both ends of the pin 6′ have acquired a widened part by means of plastic deformation. Of course, such a pin 6′ can also be used in other embodiments of the coupling device, for example the embodiment of Fig. 1. It is, however, pointed out that a rapid and simple composition of the coupling device is possible through use of the cap 2 shown in Fig. 1. Instead of the cap 2, a pull ring fed through the relevant end of the pin could also be used.

Instead of the clamping strip 5 shown, ach of the protuberances 10 of the tumbler element 3 can be provided with a strip of flexible material, one strip being provided with at least one knob-like projection, and the other strip being provided with a number of holes which are distributed along the length of the strip, and which can allow through in locking fashion a knob-like projection of the other strip. Instead of the knob-like projection, one strip can also be provided with a number of successive thickened parts, such as tooth-type projections running at right angles to the central axis of the one strip, and the other strip can be provided with a single bore for allowing through the one strip, the thickened parts ensuring a lock. Of course, it is also possible to use a single strip which has on one end part a series of thickened parts and on the other end a hole for allowing through the thickened parts, while the strip is conveyed through a bore in a coupling piece connected to the tumbler element 3.

As an alternative, the tumbler element 3 can be fastened to the sleeve part 15 by a coupling piece in fixed fashion, for example by welding.

## Claims

1. Coupling device for coupling two structural elements, one of which has a sleeve part (15) and the other has an insertion part (16) to be inserted in the sleeve part (15), while the sleeve part (15) and the insertion part (16) have at least one pair of holes (17-18; - 19-20) which are opposite each other when the parts (15, 16) are coupled and have centre lines which run essentially radially relative to the parts in order to permit insertion of a pin (1) via the holes crosswise through the parts (15, 16), an end part (8) of said pin (1) being lockable relative to the sleeve part (15) by means of locking means connected to the sleeve part (15) when the pin is inserted via the holes into the parts (15, 16) in which the lockable end part (8) of the pin is bent over, **characterized** in that the locking means comprise a substantially flat tumbler element (3, 3', 3") which is rotatable about an axis intersecting at right angles the centre line of the part of the pin (1) to be inserted into the parts (15, 16) and the tumbler element (3, 3', 3") has a hole (12) with a centre line intersecting the axis essentially at right angles and disposed at such a distance from the axis of rotation thereof that the tumbler element (3, 3', 3") is rotatable along the bent end part (8) of the inserted pin (1) between positions corresponding to the unlocked and the locked state of the pin (1).

2. Coupling device according to claim 1, in which the part of the pin (1) inserted into the parts (15, 16) runs horizontally through the parts (15, 16), characterized in that the axis of rotation of the tumbler element (3, 3', 3") runs horizontally and below the part of the pin (1) inserted into the parts (15, 16).

3. Coupling device according to Claim 1 or 2, in which the pin (1) has at each end thereof a stop (2, 7) to prevent the passage of each end through the locking means, characterized in that each stop is formed by a widened part (2, 7).

4. Coupling device according to Claim 3, characterized in that the widened part is formed on the bent end part of the pin (1) by a cap (2) disposed in clamping fashion on the end thereof.

5. Coupling device according to one of the preceding claims, characterized in that the bent end part (8) of the pin (1) is bent over at right angles, and the tumbler element (3, 3', 3") can turn through an angle of approximately 90° over the bent end part (8) of the pin (1) when the pin (1) is inserted.

6. Coupling device according to Claim 5, characterized in that the tumbler element (3, 3', 3") has at the side of the bent end part (8) of the pin a seat (22) which rests against the sleeve part (15) in the position of the tumbler element (3, 3', 3") which corresponds to the unlocked position of the pin (1).

7. Coupling device according to one of the preceding claims, characterized by clamping means to be fitted round the sleeve part (15) which are suitable for clamping the locking means to the sleeve part (15).

8. Coupling device according to Claim 7, characterized in that the clamping means comprise a flexible strip (5, 5').

9. Coupling device according to Claim 8, characterized in that the strip (5, 5') is of adjustable length.

10. Coupling device according to Claim 9, characterized in that the strip (5, 5') or the component parts thereof has (have) one or more knobs and one or more holes to allow through a knob, for the purpose of being able to obtain a joint connection therewith.

11. Coupling device according to Claim 9, characterized in that the strip (5, 5') or the component parts thereof has (have) a number of thickened parts and a bore for allowing through the strip part with the thickened parts, in order thereby to obtain a stop connection.

12. Coupling device according to one of the preceding claims, characterized in that one side of the tumbler element (3, 3', 3") which is visible when the tumbler element (3, 3', 3") is turned by one its sides against the sleeve part (15) is of a colour which contrasts with the colour of the sleeve part (15).

## Patentansprüche

1. Verbindungsteil zur Verbindung von zwei Konstruktionselementen, von denen das eine einen Hülsenabschnitt (15) und das andere einen in den Hülsenabschnitt (15) einsetzbaren Einsetzabschnitt (16) aufweist, wobei der Hülsenabschnittt (15) und der Einsetzabschnitt (16) mindestens ein Paar Öffnungen (17, 18 - 19, 20) haben, die, wenn die Teile (15, 16) miteinander verbunden sind, einander gegenüberliegen und Mittellinien haben, die relativ zu den Teilen im wesentlichen radial verlaufen, um das Einsetzen eines Stiftes (1) durch die Öffnungen quer zu den Teilen (15, 16) zu ermöglichen, wobei weiter ein Endabschnitt (8) des Stiftes (1) relativ zum Hülsenteil (15) mittels einer mit dem Hülsenteil (15) verbundenen Verriegelungseinrichtung verriegelbar ist, wenn der Stift durch die Öffnungen in die Teile (15, 16) eingesetzt ist, wobei der verriegelbare Endabschnitt (8) des Stiftes umgebogen ist, dadurch gekennzeichnet, daß die Verriegelungseinrichtung ein im wesentlichen flaches Zuhaltungselement (3, 3', 3") umfaßt, das um eine die Mittellinie des in die Teile (15, 16) einzusetzenden Teils des Stiftes (1) im rechten Winkel schneidende Achse drehbar ist und das eine Öffnung (12) mit einer die Achse im wesentlichen im rechten Winkel schneidenden Mittellinie aufweist, die in einem solchen Abstand von seiner Drehachse angeordnet ist, daß das Zuhaltungselement (3, 3', 3") längs des umgebogenen Abschnitts (8) des eingesetzten Stiftes (1) zwischen einer dem entriegelten und verriegelten Zustand des Stiftes (1) entsprechenden Stellung drehbar ist.

2. Verbindungsteil nach Anspruch 1, wobei der in die Teile (15, 16) eingesetzte Abschnitt des Stiftes (1) horizontal durch die Teile (15, 16) verläuft, dadurch gekennzeichnet, daß die Drehachse des Zuhaltungselements (3, 3', 3") horizontal und unter dem in die Teile (15, 16) eingesetzten Abschnitt des Stiftes (1) verläuft.

3. Verbindungsteil nach Anspruch 1 oder 2, wobei der Stift (1) an jedem Ende einen Anschlag (2, 7) aufweist, um ein Durchrutschen jedes Endes durch die Verriegelungseinrichtung zu verhindern, dadurch gekennzeichnet, daß jeder Anschlag mittels eines erweiterten Abschnitts (2, 7) ausgebildet ist.

4. Verbindungsteil nach Anspruch 3, dadurch gekennzeichnet, daß der erweiterte Abschnitt am umgebogenen Endabschnitt des Stiftes (1) mittels einer auf das Ende desselben aufgeklemmten Kappe (2) ausgebildet ist.

5. Verbindungsteil nach einem der vorhergehenden Ansprüche, dadurch gekennzeichnet, daß der umgebogene Endabschnitt (8) des Stiftes (1) im rechten Winkel umgebogen ist, und daß das Zuhaltungselement (3, 3', 3") über den umgebogenen Endabschnitt (8) des Stiftes (1) um einen Winkel von etwa 90° verschwenkt werden kann, wenn der Stift (1) eingesetzt ist.

6. Verbindungsteil nach Anspruch 5, dadurch gekennzeichnet, daß das Zuhaltungselement (3, 3', 3") an der Seite des umgebogenen Endabschnitts (8) des Stiftes einen Sitz (22) aufweist, der in der Lage des Zuhaltungselements (3, 3', 3"), die der verriegelten Lage des Stiftes (1) entspricht, gegen den Hülsenabschnitt (15) anliegt.

7. Verbindungsteil nach einem der vorhergehenden Ansprüche, gekennzeichnet durch um den Hülsenabschnitt (15) passend anzuordnende Klemmeinrichtungen, die zum Verklemmen der Verriegelungseinrichtung mit dem Hülsenabschnitt (15) geeignet sind.

8. Verbindungsteil nach Anspruch 7, dadurch gekennzeichnet, daß die Klemmeinrichtungen ein flexibles Band (5, 5') umfassen.

9. Verbindungsteil nach Anspruch 8, dadurch gekennzeichnet, daß das Band (5, 5') von einstellbarer Länge ist.

10. Verbindungsteil nach Anspruch 9, dadurch gekennzeichnet, daß das Band (5, 5') oder seine Bestandteile einen oder mehrere Knöpfe und eine oder mehrere Öffnungen hat (haben), um damit mittels eines Knopfes eine zusammenhaltende Verbindung zu erhalten.

11. Verbindungsteil nach Anspruch 9, dadurch gekennzeichnet, daß das Band (5, 5') oder seine Bestandteile eine Anzahl verdickter Teile und eine Bohrung hat (haben), um damit mittels der durch den Bandabschnitt gehenden verdickten Teile eine Anschlagsverbindung zu erhalten.

12. Verbindungsteil nach einem der vorhergehenden Ansprüche, dadurch gekennzeichnet, daß eine Seite des Zuhaltungselements (3, 3', 3"), das sichtbar ist, wenn das Zuhaltungselement (3, 3', 3") mit einer seiner Seiten gegen den Hülsenabschnitt (15) verschwenkt ist, eine Farbe aufweist, die zur Farbe des Hülsenabschnitts (15) im Kontrast steht.

## Revendications

1. Elément d'accouplement pour accoupler deux éléments de structure, dont l'un comporte une partie manchon (15) et l'autre une partie insertion (16) à insérer dans la partie manchon (15), la partie manchon (15) et la partie insertion (16) présentant au moins une paire de trous (17, 18 - 19, 20) qui sont en face les uns des autres quand les parties (15, 16) sont accouplées et qui ont des axes qui sont pratiquement radiaux par rapport aux parties afin de permettre l'insertion d'une cheville (1) à travers les parties (15, 16) par l'intermédiaire des trous, un bout (8) de ladite cheville (1) étant verrouillable par rapport à la partie manchon (15) par des moyens de verrouillage relié à la partie manchon (15) quand la cheville est insérée par les trous dans les parties (15, 16), le bout verrouillable (8) de la cheville étant coudé, caractérisé en ce que les moyens de verrouillage comprennent un élément basculeur pratiquement plat (3, 3', 3") qui peut pivoter autour d'un axe perpendiculaire à l'axe de la partie de cheville (1) à insérer dans les parties (15, 16) et qui présente un trou (12) dont l'axe est sensiblement perpendiculaire à l'axe et placé à une distance de son axe de pivotement telle que l'élément basculeur (3, 3', 3") peut tourner le long du bout coudé (8) de la cheville insérée (1) entre des positions correspondant à un état non verrouillé et un état verrouillé de la cheville (1).

2. Elément d'accouplement suivant la revendication 1, dans lequel la partie de la cheville insérée dans les parties (15, 16) les traverse horizontalement les parties (15, 16), caractérisé en ce que l'axe de pivotement de l'élément basculeur (3, 3', 3") est horizontal et au-dessous de la partie de la cheville (1) insérée dans les parties (15, 16).

3. Elément d'accouplement suivant la revendication 1 ou 2, dans lequel la cheville (1) comporte, à chacun de ses bouts, une pièce d'arrêt (2, 7) pour empêcher leur passage à travers les moyens de verrouillage, caractérisé en ce que chaque pièce d'arrêt comprend une partie élargie (2, 7).

4. Elément d'accouplement suivant la revendication 3, caractérisé en ce que la partie élargie est formée sur le bout coudé de la cheville (1) par un chapeau (2) placé de manière à se bloquer sur son bout.

5. Elément d'accouplement suivant l'une des revendications précédentes, caractérisé en ce que le bout coudé (8) de la cheville (1) est coudé à angle droit et que l'élément basculeur (3, 3', 3") peut pivoter d'un angle d'approximativement 90° sur le bout coudé (8) de la cheville (1) quand la cheville (1) a été insérée.

6. Elément d'accouplement suivant la revendication 5, caractérisé en ce que l'élément basculeur (3, 3', 3") comporte, du côté du bout coudé (8) de la cheville, un siège (22) qui repose contre la partie manchon (15) dans la position de l'élément (3, 3', 3") qui correspond à la position verrouillée de la cheville (1).

7. Elément d'accouplement suivant l'une des revendications précédentes, caractérisé en ce qu'il est prévu des moyens de blocage à adapter autour de la partie manchon (15) qui sont appropriés pour bloquer les moyens de verrouillage sur la partie manchon (15).

8. Elément d'accouplement suivant la revendication 7, caractérisé en ce que les moyens de blocage comprennent une bande souple (5, 5').

9. Elément d'accouplement suivant la revendication 8, caractérisé en ce que la bande (5, 5') est de longueur réglable.

10. Elément d'accouplement suivant la revendication 9, caractérisé en ce que la bande (5, 5') ou ses pièces composantes ont un ou plusieurs boutons et un ou plusieurs trous pour le passage d'un bouton, dans le but de pouvoir obtenir une liaison avec eux.

11. Elément d'accouplement suivant la revendication 9, caractérisé en ce que la bande (5, 5') ou ses pièces composantes ont un certain nombre de parties épaissies et un trou pour permettre le passage des parties épaissies dans la partie bande, afin d'obtenir ainsi une liaison d'arrêt.

12. Elément d'accouplement suivant l'une des revendications précédentes, caractérisé en ce qu'un côté de l'élément basculeur (3, 3', 3") qui est visible quand l'élément basculeur (3, 3', 3") est tourné par un de ses côtés contre la partie manchon (15) est d'une couleur qui contraste avec la couleur de la partie manchon (15).
